# EUROPÄISCHE PATENTSCHRIFT

(11) **EP 0 812 045 B1**
(45) Veröffentlichungstag und Bekanntmachung des Hinweises auf die Patenterteilung: **15.03.2000**
(21) Anmeldenummer: 97109027.9
(22) Anmeldetag: 04.06.1997
(51) Int. Cl.: H02G 3/38, H02G 3/04

(54) **Kabelkanal für Gebäudeinnenräume**
Cable duct for rooms inside buildings
Conduit pour câbles pour des pièces à l'intérieur d'immeubles

(30) Priorität: 07.06.1996 DE 19622835
(43) Veröffentlichungstag der Anmeldung: 10.12.1997
(73) Patentinhaber: Schletter, Ludwig, 83527 Haag (DE)
(72) Erfinder: Schletter, Ludwig, 83527 Haag (DE)
(74) Vertreter: Hiltl, Elmar, Dr.

(56) Entgegenhaltungen:
- DE-A- 2 415 768
- FR-A- 1 487 032
- GB-A- 1 020 164
- US-A- 2 569 916

## Beschreibung

Die Erfindung betrifft einen Kabelkanal zur Verlegung im Übergangsbereich zwischen Fußboden und Wand eines Gebäudeinnenraums.

Derartige Kabelkanäle sind bekannt. Sie sind im wesentlichen Fußbodenleisten mit einer durchgehenden Aussparung an ihrer Rückseite, worin Kabel verlegt werden können. Ein solcher Kabelkanal besteht aus zwei etwa senkrecht aufeinanderstehenden Kanalwänden in Form eines L-Profils. Er wird im Übergangsbereich zwischen Fußboden und Wand eines Gebäudeinnenraums derart angeordnet, daß der Raum zwischen den Schenkeln des L-Profils zusätzlich vom Fußboden und der Wand des Gebäudeinnenraums begrenzt wird und dadurch ein Kabelaufnahmeraum gebildet wird.

Eine solche Ausgestaltung ist aber aus verschiedenen Gründen nachteilig. Derartige Fußbodenleisten haben aus optischen Gründen relativ kleine Querschnittsabmessungen, wodurch sich zwangsläufig auch ein sehr beschränkter Kabelaufnahmeraum für nur wenige Kabel ergibt. Beim Öffnen bzw. Abnehmen- des montierten Kabelkanals, um beispielsweise Kabel auszutauschen oder zusätzliche Kabel zu verlegen, verlieren die Kabel jeden Halt und liegen lose auf dem Fußboden; sie müssen dann beim Wiederbefestigen des Kabelkanals wieder Stück für Stück darunter eingeschoben werden. Ferner ist es mit einem solchen Kabelkanal unmöglich, Kabel teilweise verdeckt im Fußboden zu führen, wie es zum Beispiel im Bereich von Türen notwendig ist. Der Kabelkanal soll auch so ausgebildet sein, daß er nach der Verlegung trotz seiner Größe möglichst wenig auffällt.

Aus der FR-A-1487032 ist ein unter anderem für Kabel vorgesehener Kanal zur Verlegung im Übergangsbereich zwischen Fußboden und Wand eines Gebäudeinnenraums bekannt. Der Kabelkanal ist unbefriedigend, weil er ohne sichtbare große Querschnittsabmessungen nicht mit einem großen Kabelinnenraum ausgebildet werden kann, eine speziell für ihn hergestellte Abdeckung benötigt und im Bereich von Türen und ähnlichen Übergängen eines Fußbodens nicht verdeckt verlegt werden kann.

Die GB-A-1020164 beschreibt eine im Übergangsbereich zwischen Fußboden und Wand anzubringende Wandabschlußleiste mit einem in die Wand eingesetzten Hauptteil und einer an der Vorderseite aufgesetzten Deckelleiste. Die Wandabschlußleiste kann zwar Kabel aufnehmen, faßt aber nur sehr wenige hiervon, wenn die Abmessungen der Leiste nicht wesentlich vergrößert werden. Ferner benötigt dieser Stand der Technik eine speziell angefertigte Deckelleiste und bietet keine Möglichkeit, im Bereich von Türen und ähnlichen Übergängen eines Fußbodens verdeckt verlegt zu werden.

Der Erfindung liegt daher die Aufgabe zugrunde, einen Kabelkanal zur Verlegung im Übergangsbereich zwischen Fußboden und Wand eines Gebäudeinnenraums anzugeben, der nach seiner Verlegung wieder leicht geöffnet werden kann, einen Kabelaufnahmeraum mit relativ großem Querschnitt aufweist, ohne das Aussehen der entsprechenden Fußbodenleisten zu beeinträchtigen, im Bereich von Türen und ähnlichen Übergängen eines Fußbodens verdeckt verlegt werden kann und eine optimale Anpassung an den Wandputz und den Fußboden eines Gebäudeinnenraums erlaubt.

Diese Aufgabe löst die Erfindung durch einen Kabelkanal zur Verlegung im Übergangsbereich zwischen Fußboden und Wand eines Gebäudeinnenraums, mit Kanalwänden und einem von diesen mindestens teilweise eingeschlossenen Kabelaufnahmeraum, wobei der Kabelkanal im wesentlichen ein Hohlprofil ist und bei funktionsgemäßer Position auf seiner dem Gebäudeinnenraum zugewandten Seite eine durchgehende Längsöffnung und darunter einen durchgehenden Vorsprung mit einer horizontalen Auflagefläche aufweist sowie an der Decke des Kabelkanals dessen Breite derart bemessen ist, daß sie im wesentlichen der Dicke des Wandputzes entspricht, der sich nach dem Verlegen des Kabelkanals über diesem anschließen soll,
dadurch gekennzeichnet, daß
(a) die horizontale Auflagefläche (19) derart angeordnet ist, daß sie für das Verlegen des Estrichs (3) in dem Gebäudeinnenraum eine Abzugsschiene darstellt,
(b) an der Decke (14) des Kabelkanals die dem Gebäudeinnenraum zugewandte Oberkante (26) derart angeordnet ist, daß sie für das Aufbringen des Wandputzes (7) auf das Mauerwerk (6) eine Abzugsschiene darstellt, und
(c) der Kabelkanal in seinem oberen Bereich an der dem Gebäudeinnenraum zugewandten Seite einen sich nach unten erstreckenden Wandabschnitt (20) zur Befestigung einer Fußbodenleiste (21) aufweist.

Der erfindungsgemäße Kabelkanal ist sehr vorteilhaft. Er bietet selbst in seiner kleinsten Ausführungsform einen größeren Kabelaufnahmeraum als die bekannten Kabelkanäle, weil ein Teil des Kabelaufnahmeraums in die Dicke des Wandputzes und in die Dicke des Bodenbelags (Teppichboden, Parkett usw.) hineinreicht, der jeweils auf dem Estrich verlegt ist. Bei Bedarf bietet der erfindungsgemäße Kabelkanal einen stark vergrößerten Kabelaufnahmeraum, der sich zum großen Teil im Fußboden nach unten in das Niveau des Estrichs oder sogar darüber hinaus erstrecken kann.

Der Kabelkanal hat insbesondere zwei wesentliche Vorzüge: Der Kabelkanal wird nicht, wie es bei bekannten Kanälen üblich ist, erst nach Fertigstellung der Wände (einschließlich Maler- und Tapezierarbeiten) und des Fußbodens (einschließlich der Bodenlegearbeiten) montiert, sondern noch im Rohbau vor Anbringung des Wandputzes und vor Verlegung des Estrichs an der Wand befestigt, z.B. verschraubt. Daraus ergibt sich der eine Vorteil, daß die dem Gebäudeinnenraum zugewandte Oberkante des Kabelkanals als Abzugsschiene beim Aufbringen des Wandputzes dienen kann. Dadurch wird ein technisch und optisch einwandfreier Übergang zwischen dem Kabelkanal und dem darüber anschließenden Wandputz erreicht.

Der andere Vorteil ist darin zu sehen, daß der durchgehende Vorsprung mit horizontaler Auflagefläche an dem Kabelkanal wiederum eine Abzugsschiene darstellt, und zwar für das Verlegen des Estrichs. Das heißt, die Oberkante des verlegten Estrichs liegt dann auf der Höhe der genannten horizontalen Auflagefläche.

Aufgrund dieser beiden Vorteile ist der Kabelkanal gleichzeitig ein wertvolles Hilfswerkzeug für das Verputzen der zugehörigen Wand und für die Ausbildung einer ebenen Estrichoberfläche.

Gemäß einer bevorzugten Ausführungsform des erfindungsgemäßen Kabelkanals erstreckt sich der Kabelaufnahmeraum im wesentlichen von der Ebene der horizontalen Auflagefläche des Vorsprungs aus nach oben. Hierbei handelt es sich um eine relativ einfache Ausführungsform des Kabelkanals, die nicht in das Niveau des Estrichs hineinreicht, aber trotzdem noch einen größeren Kabelaufnahmeraum als bekannte Kabelkanäle aufweist, ohne durch die Größe ungünstig aufzufallen.

In vielen Fällen ist eine andere Ausführungsform des erfindungsgemäßen Kabelkanals günstiger, bei der sich der Kabelaufnahmeraum zu einem wesentlichen Teil von der Ebene der horizontalen Auflagefläche des Vorsprungs aus nach unten erstreckt. Hierbei kann der lichte Querschnitt des Kabelaufnahmeraums besonders groß bemessen sein, ohne daß nach dem Verlegen des Kabelkanals der sichtbare Teil hiervon unansehnlich groß wird. Außerdem gestattet diese Ausführungsform, den Kabelkanal mit einem entsprechenden Kabelkanal-Zwischenstück zu kombinieren. Letzteres wird in besonderen Übergangsbereichen eines Gebäudeinnenraums, zum Beispiel im Bereich einer Tür und eines Türstocks, unsichtbar im Estrich verlegt.

Vorzugsweise ist der Kabelkanal im Bereich des Kabelaufnahmeraums breiter bemessen als an seiner Decke. Dadurch ist in dem Kabelaufnahmeraum für Kabel genügend Platz, und gleichzeitig kann der von oben bis an die Decke des Kabelkanals heran aufgetragene Wandputz mit dem Kanal bündig ausgebildet werden.

Erfindungsgemäß hat der Kabelkanal in seinem oberen Bereich an der dem Gebäudeinnenraum zugewandten Seite einen sich nach unten erstreckenden Wandabschnitt zur Befestigung einer Fußbodenleiste. Dies ermöglicht eine einerseits widerstandsfähige und andererseits bei Bedarf wieder leicht lösbare Verbindung zwischen dem Kabelkanal und der Fußbodenleiste. So wird der Nachteil üblicher Befestigungen von Fußbodenleisten, die häufig nur im Wandputz fixiert sind und daraus leicht ausbrechen, überwunden.

Zweckmäßigerweise besteht der Kabelkanal aus Kunststoff, Metall oder Holz. Kunststoff ist als Material bevorzugt, weil es sich für eine kostengünstige Herstellung des Kabelkanals durch Extrudieren gut eignet.

Die Erfindung betrifft auch eine Anordnung aus einem Kabelkanal entsprechend den vorgenannten Ausführungsformen und einer Fußbodenleiste. Bei der Anordnung überdeckt die Fußbodenleiste die Längsöffnung des Kabelkanals und ist an diesem lösbar befestigt. Auf diese Weise kann der Kabelkanal unsichtbar verlegt werden, läßt sich aber bei Bedarf durch Ablösen der Fußbodenleiste wieder öffnen, um Änderungen an den Kabeln vorzunehmen.

Gemäß einer bevorzugten Ausführungsform der Erfindung liegt eine Anordnung aus einem Kabelkanal und einem Kabelkanal-Zwischenstück vor. Dieses ist im wesentlichen rohrartig ausgebildet, z.B. nach Art eines Vierkantrohres, und im Querschnitt seines Innenhohlraums dem Querschnitt des Kabelaufnahmeraums des Kabelkanals angepaßt. Diese Anordnung hat den Vorteil, daß sie in Gebäudeinnenräumen überall verlegt werden kann, also zum Beispiel auch an Türen, wo keine Fußbodenleisten angebracht werden können. In diesen Bereichen wird nur das Kabelkanal-Zwischenstück verwendet und schließt an seinen beiden Enden an den normalen Kabelkanal an.

Bei den genannten Anordnungen bestehen die Fußbodenleiste und/oder das Kabelkanal-Zwischenstück vorzugsweise aus Kunststoff, Metall oder Holz.

Die Erfindung wird nachfolgend unter Bezugnahme auf die beigefügten Zeichnungen erläutert.

Es zeigen:
- Fig. 1: eine Ansicht eines senkrechten Schnitts des Übergangsbereichs zwischen einem Fußboden und einer verputzten Wand eines Gebäudeinnenraums mit einer kabelabdeckenden Fußbodenleiste gemäß dem Stand der Technik;
- Fig. 2: eine Ansicht ähnlich Fig. 1, jedoch mit einer ersten Ausführung eines erfindungsgemäßen Kabelkanals, der mit einer Fußbodenleiste abgedeckt ist;
- Fig. 3: eine Ansicht ähnlich Fig. 2, jedoch mit einer zweiten Ausführungsform des erfindungsgemäßen Kabelkanals; und
- Fig. 4: eine Ansicht ähnlich Fig. 3, jedoch an einer Stelle ohne Gebäudewand im Bereich einer Tür und mit einem Kabelkanal-Zwischenstück anstelle des Kabelkanals.

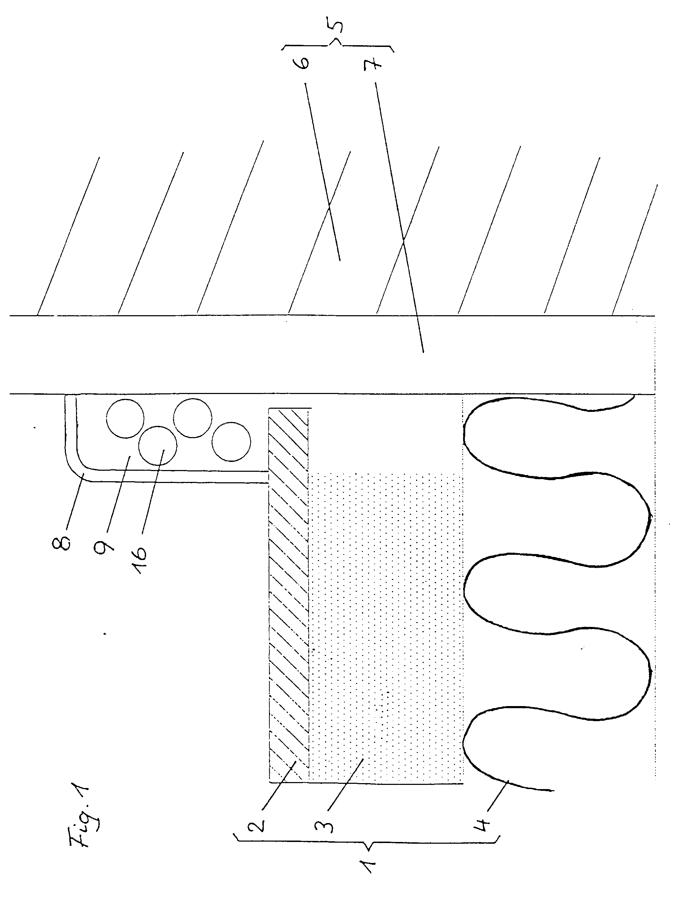

Fig. 1 bezieht sich auf den Stand der Technik und zeigt die Ansicht eines senkrechten Schnitts im Übergangsbereich zwischen einem Fußboden 1, bestehend im wesentlichen aus einem Bodenbelag 2, einem Estrich 3 und einem Schallisoliermaterial 4. Der Fußboden 1 grenzt an seinem rechten Rand an eine Gebäudewand 5, bestehend aus einem Mauerwerk 6 und einem davor aufgebrachten Wandputz 7. Der Wandputz 7 kann in der Höhe des Fußbodens 1 auch entfallen.

Im Übergangsbereich zwischen Bodenbelag 2 und Wandputz 7 ist eine übliche, im Profil L-förmige Fußbodenleiste 8 derart angeordnet, daß sie zusammen mit dem Bodenbelag 2 und dem Wandputz 7 einen Hohlraum 9 bildet. In diesem sind Kabel 16 verlegt. Die Fußbodenleiste 8 ist an bestimmten Stellen (nicht dargestellt) an dem Wandputz 7 oder dem Mauerwerk 6 durch Nägel oder Schrauben befestigt. Sie kann im Hohlraum 9 nur eine beschränkte Anzahl an Kabeln 16 aufnehmen.

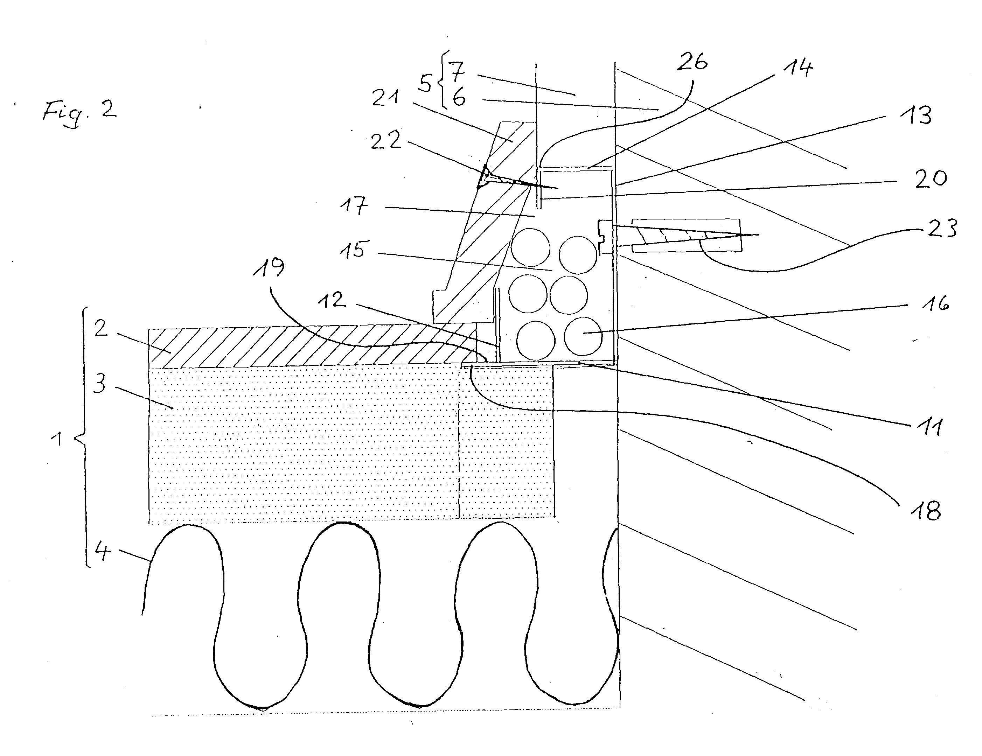

Fig. 2 ist eine ähnliche Darstellung wie Fig. 1, jedoch mit einem erfindungsgemäßen Kabelkanal. Dieser weist einen Boden 11, eine Vorderwand 12, eine Rückwand 13 und eine Decke 14 auf. Diese Elemente begrenzen im wesentlichen einen Kabelaufnahmeraum 15, in dem Kabel 16 angeordnet sind.

Der Kabelkanal ist somit im wesentlichen ein Hohlprofil 11, 12, 13, 14. Bei funktionsgemäßer Position, wie sie in Fig. 2 gezeigt wird, weist der Kabelkanal auf seiner dem Gebäudeinnenraum zugewandten Seite eine durchgehende Längsöffnung 17 und darunter einen durchgehenden Vorsprung 18 mit einer horizontalen Auflagefläche 19 auf. Bei dieser Ausführungsform des Kabelkanals liegt der Vorsprung 18 auf der Höhe des Bodens 11 und ist dessen Verlängerung.

An der Decke 14 ist der Kabelkanal derart bemessen, daß dort seine Breite im wesentlichen der Dicke des Wandputzes 7 entspricht, der sich über dem Kabelkanal anschließt.

Der Kabelaufnahmeraum 15 erstreckt sich im wesentlichen von der Ebene der horizontalen Auflagefläche 19 aus nach oben.

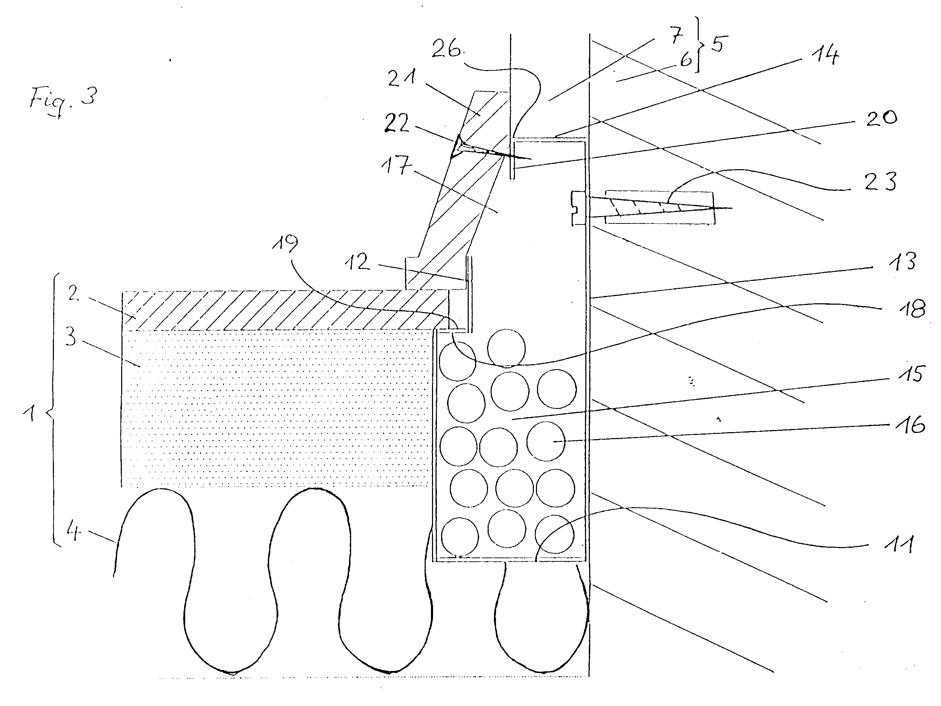

Fig. 3 zeigt eine zweite Ausführungsform des Kabelkanals. Hierbei erstreckt sich der Kabelaufnahmeraum 15 zu einem wesentlichen Teil von der Ebene der horizontalen Auflagefläche 19 aus nach unten. Der Kabelaufnahmeraum 15 reicht somit etwa von der Höhe des Bodenbelags 2 nach unten in den Bereich des Estrichs 3 und darüber hinaus bis in den Bereich des Schallisoliermaterials 4 hinein. Dadurch ist der Kabelaufnahmeraum 15 sehr groß dimensioniert und kann viele Kabel 16 aufnehmen. Der Vorsprung 18 ist bei dieser Ausführungsform als Schulter des Kabelkanals ausgebildet. Bei beiden Ausführungsformen gemäß Fig. 1 und Fig. 2 ist der Kabelkanal im Bereich des Kabelaufnahmeraums 15 breiter bemessen als an seiner Decke 14.

Für beide Ausführungsformen gemäß Fig. 2 und 3 ist auch ersichtlich, daß der Kabelkanal in seinem oberen Bereich an der dem Gebäudeinnenraum zugewandten Seite einen sich nach unten erstreckenden Wandabschnitt 20 aufweist. Dieser dient zur Befestigung einer Fußbodenleiste 21, beispielsweise mittels einer Holzschraube 22. Das Profil und die Höhenabmessung der Fußbodenleiste 21 sind derart an den Kabelkanal angepaßt, daß die Leiste 21 seine Längsöffnung 17 überdeckt. Durch die Schraubverbindung sind Kabelkanal und Fußbodenleiste 21 auch jederzeit voneinander lösbar.

Bei beiden Ausführungsformen gemäß Fig. 2 und Fig. 3 ist der Kabelkanal mittels einer Schraube-Dübel-Kombination 23 am Mauerwerk 6 befestigt. Ferner ist der Kabelkanal bei seiner funktionsgemäßen Verlegung derart an oder in der Gebäudewand 5 angeordnet, daß er sich an seiner Decke 14 durch die gesamte Dicke des Wandputzes 7 hindurch bis zum Mauerwerk 6 erstreckt. Auch befindet sich die horizontale Auflagefläche 19 auf der Höhe der Oberfläche des Estrichs 3. Letzteres erlaubt es, den Bodenbelag 2 mindestens teilweise über die Auflagefläche 19 hinweg zu verlegen.

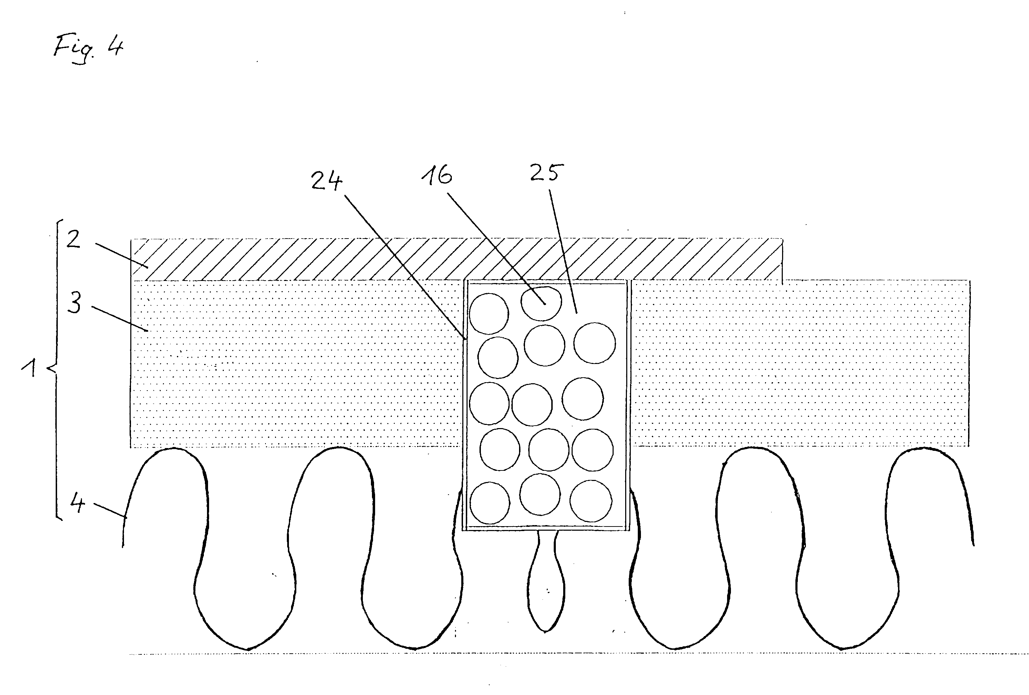

Eine weitere erfindungsgemäße Anordnung besteht aus einem Kabelkanal gemäß Fig. 3 und einem Kabelkanal-Zwischenstück 24 gemäß Fig. 4. In Fig. 4 ist ein Abschnitt des Fußbodens 1 dargestellt, der nicht an eine Gebäudewand angrenzt, sondern sich beispielsweise im Bereich einer Tür befindet, wo auch keine Fußbodenleiste verlegt werden kann. Das Kabelkanal-Zwischenstück 24 ist derart angeordnet, daß es mit der Oberseite des Estrichs 3 bündig abschließt und sich nach unten durch diesen hindurch bis in den Bereich des Schallisoliermaterials 4 erstreckt. Letzteres ist aber nicht erforderlich. Das Kabelkanal-Zwischenstück 24 ist im wesentlichen rohrartig ausgebildet und im Querschnitt seines Innenhohlraums 25 dem Querschnitt des Kabelaufnahmeraums 15 des Kabelkanals gemäß Fig. 3 angepaßt. Bei der Anordnung aus dem Kabelkanal und dem Kabelkanal-Zwischenstück 24 kann der Übergang zwischen beiden Elementen beispielsweise als normale Stoßfuge oder in Form einer dem Fachmann geläufigen Steckverbindung ausgebildet sein.

Im verlegten Zustand der Anordnung treten die Kabel 16 aus einem Ende eines ersten Kabelkanalabschnitts aus und in das eine Ende des Kabelkanal-Zwischenstücks 24 ein. Sie treten an dessen anderem Ende aus und werden in einem zweiten Kabelkanalabschnitt weitergeführt.

Bei der praktischen Verwendung der erfindungsgemäßen Kabelkanäle und Anordnungen wird normalerweise wie folgt vorgegangen:

Der Kabelkanal wird in den Fußboden 1 und den Wandputz 7 eingelassen. Dazu wird der Kabelkanal am Mauerwerk 6 beispielsweise mittels Schraube-Dübel-Kombinationen 23 befestigt, wie Fig. 2 und 3 zeigen. Bei Bedarf wird beispielsweise in einem Türbereich ein Kabelkanal-Zwischenstück 24 gemäß Fig. 4 zwischen zwei Kabelkanalabschnitten eingefügt. Anschließend kann der Wandputz 7 auf das Mauerwerk 6 aufgebracht werden. Dabei hat der erfindungsgemäße Kabelkanal den besonderen Vorteil, daß seine Decke 14 derart bemessen ist, daß dort seine Breite der Dicke des Wandputzes 7 entspricht. Deshalb kann beim Verputzen die dem Gebäudeinnenraum zugewandte Kante 26 an der Decke 14 des Kabelkanals als Abzugsschiene beim Verputzen benutzt werden. Dadurch ergibt sich zwangsläufig ein bündiger und sauberer Übergang zwischen Kabelkanal und Wandputz 7.

In ähnlicher Weise bietet der Kabelkanal einen besonderen Vorteil beim Verlegen des Estrichs 3. Die horizontale Auflagefläche 19 am Vorsprung 18 des Kabelkanals dient hier als Abzugsschiene beim Verlegen des Estrichs 3. Dabei wird ein bündiger und sauberer Übergang zwischen der Estrichoberfläche und der Auflagefläche 19 erhalten. Dies wiederum erlaubt ein Verlegen des Bodenbelags 2 bis an die Vorderwand 12 des Kabelkanals.

In dem derart verlegten Kabelkanal, gegebenenfalls mit Kabelkanal-Zwischenstücken 24, können dann die Kabel 16 nachträglich verlegt werden. Die Längsöffnung 17 des Kabelkanals wird schließlich mit einer angepaßten Fußbodenleiste 21 verschlossen. Letztere wird mittels Schrauben 22 an dem nach unten gerichteten Wandabschnitt 20 des Kabelkanals befestigt.

Bei Bedarf kann diese Schraubverbindung wieder gelöst, die Fußbodenleiste 21 wieder entfernt und die Ergänzung oder Entfernung von Kabeln 16 vorgenommen werden. Am Ende wird die Längsöffnung 17 des Kabelkanals mit der Fußbodenleiste 21 wieder verschlossen.

Die Abmessungen des erfindungsgemäßen Kabelkanals, des Kabelkanal-Zwischenstücks 24, der Kabel 16, der Fußbodenleiste 21 und der weiteren in Fig. 1 bis 4 gezeigten Elemente sind dort etwa im Maßstab 1:1 dargestellt. Die typische maximale Breite des Kabelkanals, einschließlich des Vorsprungs 18, beträgt bei den Ausführungsformen gemäß Fig. 2 und 3 jeweils 4 cm. Die typische Höhe liegt bei der Ausführungsform gemäß Fig. 2 bei etwa 5 cm und bei der Ausführungsform gemäß Fig. 3 bei etwa 11 cm. Die typische Breite an der Decke 14 des Kabelkanals beträgt etwa 2 cm. Bei dem Kabelkanal-Zwischenstück 24 ergibt sich eine typische Breite von etwa 4 cm und eine typische Höhe von etwa 6 cm. Alle diese Abmessungen können aber jeweils auch größer oder kleiner gewählt werden.

Um den Kabelkanal in der Ecke eines Gebäudeinnenraums über einen Winkel von normalerweise 90° zu führen, können entsprechend ausgebildete Eckstücke vorgesehen sein. Im einfachsten Fall werden dafür zwei Kabelkanalabschnitte in einem Gehrungswinkel von 45° entsprechend zugeschnitten und auf Stoß aneinandergefügt.

## Patentansprüche

1. Kabelkanal zur Verlegung im Übergangsbereich zwischen Fußboden und Wand eines Gebäudeinnenraums, mit Kabelwänden und einem von diesen mindestens teilweise eingeschlossenen Kabelaufnahmeraum, wobei der Kabelkanal im wesentlichen ein Hohlprofil ist und bei funktionsgemäßer Position auf seiner dem Gebäudeinnenraum zugewandten Seite eine durchgehende Längsöffnung und darunter einen durchgehenden Vorsprung mit einer horizontalen Auflagefläche aufweist sowie an der Decke des Kabelkanals dessen Breite derart bemessen ist, daß sie im wesentlichen der Dicke des Wandputzes entspricht, der sich nach dem Verlegen des Kabelkanals über diesem anschließen soll,
dadurch gekennzeichnet, daß
(a) die horizontale Auflagefläche (19) derart angeordnet ist, daß sie für das Verlegen des Estrichs (3) in dem Gebäudeinnenraum eine Abzugsschiene darstellt,
(b) an der Decke (14) des Kabelkanals die dem Gebäudeinnenraum zugewandte Oberkante (26) derart angeordnet ist, daß sie für das Aufbringen des Wandputzes (7) auf das Mauerwerk (6) eine Abzugsschiene darstellt, und
(c) der Kabelkanal in seinem oberen Bereich an der dem Gebäudeinnenraum zugewandten Seite einen sich nach unten erstreckenden Wandabschnitt (20) zur Befestigung einer Fußbodenleiste (21) aufweist.

2. Kabelkanal nach Anspruch 1, dadurch gekennzeichnet, daß sich der Kabelaufnahmeraum (15) zu einem wesentlichen Teil von der Ebene der horizontalen Auflagefläche (19) des Vorsprungs (18) aus nach unten erstreckt.

3. Anordnung aus einem Kabelkanal nach Anspruch 1 oder 2 und einem Kabelkanal-Zwischenstück (24), dadurch gekennzeichnet, daß das Kabelkanal-Zwischenstück (24) im wesentlichen rohrartig ausgebildet und im Querschnitt seines Innenhohlraums (25) dem Querschnitt des Kabelaufnahmeraums (15) des Kabelkanals angepaßt ist.

## Claims

1. Cable duct for installation in the transition region between floor and wall of a room inside a building, having cable walls and a cable receiving space enclosed at least partially by these, wherein the cable duct is essentially a hollow profile and in the functioning position has on its side turned towards the room in the building a continuous longitudinal opening and thereunder a continuous projection with a horizontal support surface as well as at the ceiling of the cable duct having a width dimensioned in such a fashion that it corresponds essentially to the thickness of the wall plaster, which, after the installation of the cable duct, should abut this,
characterised in that
(a) the horizontal support surface (19) is arranged in such a fashion that it represents a setting rail for the installation of the screed (3) in the room in the building,
(b) on the ceiling (14) of the cable duct, the upper edge (26) turned towards the room in the building is so arranged that it constitutes a setting rail for the application of the wall plaster (7) on to the wall structure (6), and
(c) the cable duct has in its upper region on the side turned towards the room in the building a downwardly extending wall section (20) for fixing a skirting board (21).

2. Cable duct according to Claim 1, characterised in that the cable receiving space (15) extends downwardly to a substantial extent from the plane of the horizontal support surface (19) past the projection (18).

3. Arrangement of a cable duct according to Claim 1 or 2 and a cable duct intermediate piece (24), characterised in that the cable duct intermediate piece (24) is constructed essentially in the form of a tube and is matched in the cross-section of its inner hollow space (25) to the cross-section of the cable receiving space (15) of the cable duct.

## Revendications

1. Goulotte pour câbles à poser dans l'interstice entre le plancher et le mur à l'intérieur d'un bâtiment, comprenant des parois et un logement pour câbles délimité au moins en partie par lesdites parois, la goulotte pour câbles étant formé sensiblement par un profilé creux et comportant, dans une position appropriée à ses fonctions, une ouverture longitudinale continue et une saillie continue, disposée en dessous de ladite ouverture et munie d'une surface de pose horizontale, lesquelles sont réalisées sur le côté orienté vers la pièce intérieure, ainsi que sur la paroi supérieure de la goulotte pour câbles, dont la largeur est définie de telle sorte qu'elle coïncide sensiblement avec l'épaisseur de l'enduit mural qui, après la pose de la goulotte pour câbles, doit être juxtaposé à celle-ci,
caractérisée en ce que
(a) la surface de pose horizontale (19) est disposée de telle sorte qu'elle constitue un rail de délimitation pour la pose de la chape en ciment (3) à l'intérieur du bâtiment,
(b) l'arête supérieure (26) orientée vers l'intérieur du bâtiment, au niveau de la paroi supérieure (14) de la goulotte pour câbles, est disposée de telle sorte qu'elle constitue un rail de délimitation pour la pose de l'enduit mural (7) contre la maçonnerie (6), et
(c) la goulotte pour câbles comporte dans la partie supérieure, sur le côté orienté vers l'intérieur du bâtiment, une partie de paroi (20), qui s'étend vers le bas et forme une fixation pour plinthe (21).

2. Goulotte pour câbles selon la revendication 1, caractérisée en ce que le logement pour câbles (15) s'étend pour une partie essentielle vers le bas à partir du plan de la surface de pose horizontale (19) de la saillie (18).

3. Système formé par une goulotte pour câbles selon la revendication 1 ou 2 et une pièce intermédiaire de la goulotte (24), caractérisée en ce que la pièce intermédiaire de la goulotte (24) est conçue sensiblement en forme de tube et la section de son volume intérieur (25) est adaptée à la section du logement pour câbles (15) de la goulotte pour câbles.
